# EUROPÄISCHE PATENTSCHRIFT

(11) **EP 1 723 014 B1**
(45) Veröffentlichungstag und Bekanntmachung des Hinweises auf die Patenterteilung: **24.06.2009**
(21) Anmeldenummer: 05707916.2
(22) Anmeldetag: 02.02.2005
(51) Int. Cl.: B60S 1/04

(54) **SCHEIBENWISCHVORRICHTUNG, INSBESONDERE FÜR EIN KRAFTFAHRZEUG**
WINDSHIELD WIPER DEVICE, PARTICULARLY FOR A MOTOR VEHICLE
SYSTEME D'ESSUIE-GLACE DESTINE EN PARTICULIER A UN VEHICULE AUTOMOBILE

(30) Priorität: 04.03.2004 DE 102004010513
(43) Veröffentlichungstag der Anmeldung: 22.11.2006
(73) Patentinhaber: ROBERT BOSCH GMBH, 70442 Stuttgart (DE)
(72) Erfinder: KRAUS, Achim, 77815 Buehl (DE); RAPP, Juergen, 77886 Lauf (DE); SCHABANEL, François, F-94100 Saint Maux des Fossés (FR)
(86) Internationale Anmeldenummer: PCT/EP2005/050445
(87) Internationale Veröffentlichungsnummer: WO 2005/085023

(56) Entgegenhaltungen:
- EP-A- 0 916 559
- EP-A- 1 033 295
- WO-A-03/047926
- WO-A-03/051689
- US-B1- 6 532 616

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen für Kraftfahrzeuge bekannt, die einen Befestigungsabschnitt und ein Befestigungsmittel aufweisen, das zur Befestigung der Scheibenwischvorrichtung am Kraftfahrzeug dient

Aus der DE-A-100 55 426 ist eine Scheibenwischvorrichtung bekannt, die ein Wischerlager mit einem Befestigungsabschnitt aufweist, der im wesentlichen plattenförmig ausgebildet ist und ein zentrales Loch aufweist, so dass er mittels einer Schraube als Befestigungsmittel an der Karosserie des Kraftfahrzeugs verschraubt werden kann. Der Befestigungsabschnitt ist hierbei nahe der Wischerwelle angeordnet, die im Wischerlager gelagert ist und nach der Montage im Kraftfahrzeug aus der Karosserie herausragt, um die Wischerarme mit den Wischblättem anzutreiben.

Prallt bei einem Unfall ein Fußgänger auf die Karosserie des Kraftfahrzeuges auf, so kann sich dieser an den aus der Karosserie herausragenden Wischerwellen erhebliche Verletzungen zuziehen. Da die Scheibenwischvorrichtung im Regelfall sehr dicht unter der Karosserie angeordnet ist, vermag die Karosserie in diesem Bereich auch nur wenig zurückzuweichen, so dass hierdurch ein weiteres Gefährdungspotential für einen Fußgänger gegeben ist.

Nun ist es wünschenswert, dass beim Aufprall eines Fußgängers die Scheibenwischvorrichtung und die Wischerwellen derart zurückzuweichen vermögen, dass die Verletzungsgefahr für einen Fußgänger bei einem derartigen Aufprall reduziert wird.

Hierzu ist bekannt, im Befestigungsabschnitt eine Sollbruchstelle vorzusehen, so dass dieser bei Einwirkung einer definierten axialen Kraft auf die Wischerwelle bricht und die Scheibenwischvorrichtung in das Innere der Karosserie abtauchen kann. Voraussetzung hierzu ist jedoch, dass im Inneren der Karosserie des Kraftfahrzeugs, insbesondere im Bereich der Scheibenwischvorrichtung, genügend Bauraum vorhanden ist. Problematisch ist hierbei weiterhin, dass das Abtauchen der Scheibenwischvorrichtung wahllos in beliebiger Richtung erfolgt.

Aus der WO-A-03/047926 ist eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass durch ein Sollbruchelement zwischen Befestigungsabschnitt und Kraftfahrzeug, die Scheibenwischvorrichtung in einer vorbestimmbaren Bahn ins Innere der Karosserie abzutauchen vermag. Weiterhin ist es vorteilhaft, dass die Richtung der definierten Aufprallkraft nicht zwangsweise axial zur Wischerwelle erfolgen muss, sondern auch bei anderen Richtungen der Krafteinwirkung ein zuverlässiges Zurückweichen der Wischerwelle bzw. der gesamten Scheibenwischvorrichtung gewährleistet ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn ein Wischerlager vorgesehen ist, in dem zumindest eine Wischerwelle gelagert ist, an dem ein Wischerarm befestigbar ist und der Befestigungsabschnitt am Wischerlager angeordnet ist. Beim Aufprall eines Fußgängers wirkt typischerweise die größte Kraft auf die aus der Karosserie herausragenden Wischerwellen bzw. auf die mit den Wischerwellen verbundenen Wischerarmen. Ist der Befestigungsabschnitt am Wischerlager angeordnet, so wird die Aufprallkraft vorteilhafter Weise gezielt auf den Befestigungsabschnitt und damit auf das Sollbruchelement geleitet, so dass dieses sich zum Schutz des Fußgängers verbiegen und/oder brechen kann.

Besonders einfach und kostengünstig lässt sich das Sollbruchelement einstückig mit dem Befestigungsabschnitt ausbilden.

Ein besonders wirkungsvolles Sollbruchelement weist eine erste Scheibe und eine zweite Scheibe auf, die koaxial zueinander angeordnet sind und durch mehrere Stützstreben verbunden sind. Beim Aufprall eines Fußgängers vermögen die Stützstreben sich unter Energieaufnahme zu verbiegen und/oder abzubrechen, so dass eine maximale Energieaufnahme auf der Aufprallenergie stattfindet.

Hierbei ist es besonders vorteilhaft, wenn die erste Scheibe dem Befestigungsabschnitt zugewandt ist und einen kleineren Durchmesser aufweist, als die zweite Scheibe, um das Biege- und Brachverhalten des Sollbruchelements zu verbessern.

Besonders kostengünstig lässt sich das Sollbruchelement einstückig aus Kunststoff, insbesondere in einem Spritz-Guss-Verfahren ausbilden.

Ebenso kostengünstig und wirkungsvoll ist eine Ausbildung des Sollbruchelements aus Aluminium oder Zinkdruckguss.

Ist das Befestigungsmittel als Schraube oder Niete ausgebildet, so ist die Scheibenwischvorrichtung leicht und einfach im Kraftfahrzeug zu befestigen.

Als besonders wirkungsvoll hat sich erwiesen, dass das Befestigungsmittel in einer Hülse angeordnet ist, die das Sollbruchelement durchgreift.

Ist zwischen Befestigungsabschnitt und Sollbruchelement ein Dämpfungselement vorgesehen, so wird das Schwingungsverhalten der Scheibenwischvorrichtung vorteilhafterweise verbessert.

### Zeichnungen

Ein Ausführungsbeispiel der Erfindung ist in den Zeichnungen dargestellt und in der nachfolgende Beschreibung näher erläutert. Es zeigen:
- Figur 1: eine erfindungsgemäße Scheibenwischvorrichtung in schematischer Darstellung,
- Figur 2: die Befestigung der Scheibenwischvorrichtung an der Karosserie des Kraftfahrzeuges im Detail,
- Figur 3: eine schematische Darstellung der Befestigung der Scheibenwischvorrichtung vor einem Aufprall und
- Figur 4: eine schematische Darstellung der Befestigung nach Figur 3 nach einem Aufprall.

### Beschreibung des Ausführungsbeispiels

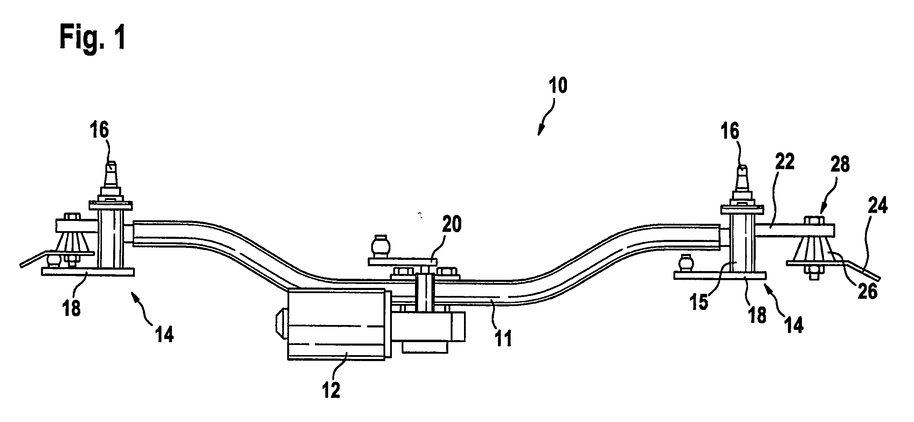

In Figur 1 ist eine erfindungsgemäße Scheibenwischvorrichtung in einer schematischen Seitenansicht gezeigt.

Diese besteht im Wesentlichen aus einem Trägerrohr 11, an dem ein Wischermotor 12 befestigt ist. Das Trägerrohr 11 weist zwei Enden auf, an denen jeweils ein Wischerlager 14 angeordnet ist.

Das Wischerlager 14 besteht im Wesentlichen aus einem rohrförmigen Abschnitt 15, der von einer Wischerwelle 16 durchgriffen wird. Die Wischerwelle 16 selbst ist an einem Ende mit einer Antriebskurbel 18 drehfest verbunden, die über eine der Übersichtlichkeit halber nicht gezeichnete Schubstange mit einer vom Wischermotor 12 angetriebenen Abtriebskurbel 20 verbunden ist.

Im Betrieb vollführt die Abtriebskurbel 20 eine Rotations- oder eine Hin- und Herbewegung, wodurch über die Schubstange, die Antriebskurbel 18 und damit die Wischerwelle 16 in eine Pendelbewegung versetzt wird.

Aus Gründen der Übersichtlichkeit wurden die Bezugszeichen hier nur auf einer Seite der Scheibenwischvorrichtung 10 angeordnet, für die gegenüberliegende Seite bzw. das gegenüberliegende Wischerlager 14 gilt selbstverständlich das Gleiche.

Vom rohrförmigen Abschnitt 15 aus erstreckt sich auf der dem Trägerrohr 11 abgewandten Seite ein Befestigungsabschnitt 22, der im Wesentlichen als ebene Platte ausgebildet ist und ein Loch zur Befestigung der Scheibenwischvorrichtung 10 an der Fahrzeugkarosserie 24 aufweist. Zwischen dem Befestigungsabschnitt 22 und der Fahrzeugkarosserie 24 ist ein Sollbruchelement 26 angeordnet, das kronenförmig ausgebildet ist. Der Befestigungsabschnitt 22, das Sollbruchelement 26 und das Karosserieblech 24 sind von einer Schraube als Befestigungsmittel 28 durchgriffen, die in eine auf dem Karosserieblech 24 aufgeschweißte Schraubenmutter eingedreht ist.

In einer Variation kann als Befestigungsmittel natürlich auch eine Niete vorgesehen sein oder der Befestigungsabschnitt 22 mit dem Sollbruchelement 26 einstückig ausgebildet sein. In einer weiteren Variation kann der Befestigungsabschnitt 22 mit dem Sollbruchelement 26 auch verklebt sein und - unabhängig davon - auch das Sollbruchelement 26 auf das Karosserieblech 24 aufgeklebt sein. Selbstverständlich ist es auch möglich, das Karosserieblech 24 mit einem Gewinde zu versehen, in das die Schraube 28 eingeschraubt ist.

Das Wischerlager 14 weist darüber hinaus einen zylindrischen Hefestigungsstutzen 25 auf, der sich etwa senkrecht aus dem rohrformigen Abschnitt 15 heraus erstreckt und in das Innere des Trägerrohrs 11 eingeschoben und dort mit dem Trägerrohr 11 vercrimpt ist

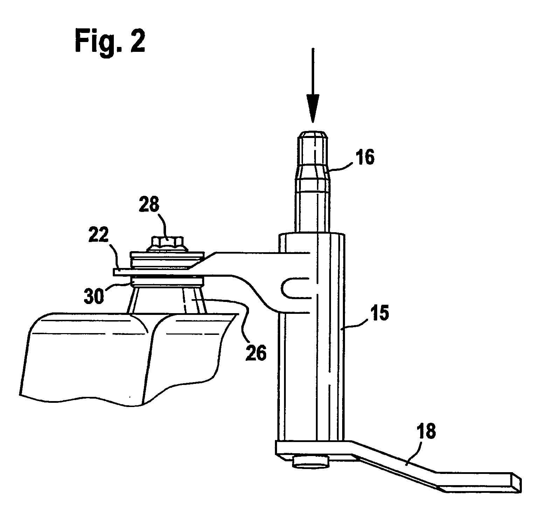

In Figur 2 ist das Wischerlager 14 mit dem Befestigungsabschnitt 22 im Detail dargestellt.

Aus dem rohrförmigen Abschnitt 15 heraus erstreckt sich axial der plattenartige Befestigungsabschnitt 22, der länglich ausgebildet ist und an einem Ende den rohrförmigen Abschnitt 15 trägt. Am anderen Ende weist der Befestigungsabschnitt 22 eine Öffnung auf, in die ein gummiartiges Dämpfungselement 30 eingesteckt ist. Das Sollbruchelement 26 ist zwischen dem Dämpfungselement 30 und dem Karosserieblech 24 angeordnet. Das Dämpfungselement und damit der Befestigungsabschnitt 22, das Sollbruchelement 26 sowie das Karosserieblech 24 sind von einer Schraube als Befestigungsmittel 28 durchgriffen, so dass das Wischerlager 14 im Kraftfahrzeug fest am Karosserieblech befestigt ist

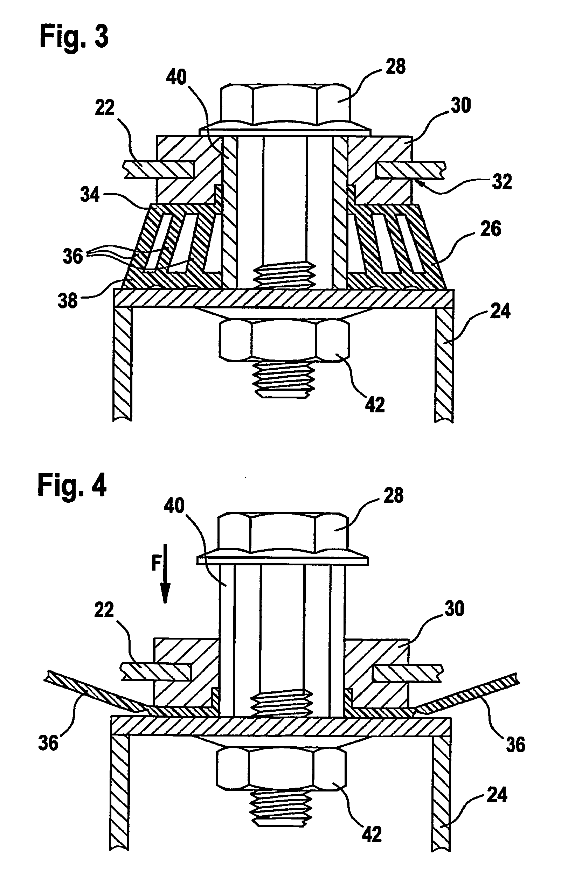

In Figur 3 ist die Befestigung des Wischerlagers 14 im Detail dargestellt. Im Befestigungsabschnitt 22 sitzt das Dämpfungselement 30, das ringförmig ausgebildet ist und einen Einschnitt 32 aufweist, in den der Befestigungsabschnitt 22 des Wischerlagers 14 eingesteckt ist. Das Sollbruchelement 26 ist einstückig aus Metall ausgebildet und schließt sich unmittelbar an das Dämpfungselement 30 an. Im Detail weist das Sollbruchelement 26 eine obere kreisringförmige Scheibe 34 auf, die mit dem Dämpfungselement 30 in Kontakt steht. An die Scheibe 34 schließen sich Stützstreben 36 an, die sich an einer unteren kreisringförmigen Scheibe 38 abstützen. Die Scheibe 34, 38 und die Stützstreben 36 sind einstückig ausgebildet. Die untere Scheibe 38 sitzt auf dem Karosserieblech 34 direkt auf.

In einer Variation können hier selbstverständlich auch Ausgleichs- oder Dämpfungselemente eingebracht werden.

Das Dämpfungselement 30 und damit der Befestigungsabschnitt 22, sowie das Sollbruchelement 26 sind von einer Hülse 40 durchgriffen, welche eine im Wesentlichen hohlzylinderförmige Struktur aufweist. Um die Scheibenwischvorrichtung 10 fest zu haltern, ist die Länge der hohlzylindrischen Hülse 40 etwas kleiner, als die Gesamthöhe des Dämpfungselements 30 und des Sollbruchelements 26.

Die Hülse 40 und damit der Befestigungsabschnitt 22 mit dem Dämpfungselement 30, das Sollbruchelement 26 und das Karosserieblech 24 sind von einer Schraube 28 durchgriffen, die auf der Seite des Karosseriebleches 24 mit Hilfe einer Schraubenmutter 42 gesichert ist.

Im Folgenden soll die Funktion des Sollbruchelements 26 erläutert werden. Wirkt eine Kraft F auf die Wischerwelle 16 bzw. auf die Scheibenwischvorrichtung 10, so wird der rohrförmige Abschnitt 15, der fest mit dem Befestigungsabschnitt 22 verbunden ist, nach unten bzw. in das Kraftfahrzeug hinein gedrückt. In Figur 4 ist dies durch den Kraftpfeil F verdeutlicht. Wird eine vorbestimmte definierte Kraft überschritten, so verbiegen oder brechen die Stützstreben 36 des Sollbruchelements 26, so dass der Befestigungsabschnitt 22 und damit die gesamte Scheibenwischvorrichtung 10 nach unten, in Richtung des Karosserieblechs 24, zu gleiten vermag. Somit vermag die Scheibenwischvorrichtung 10 im Falle eines Aufpralls eines Fußgängers zurückzuweichen und die Verletzungsgefahr zu vermindern.

Das Sollbruchelement 26 muss hierbei nicht zwangsweise zerbrechen, es kann genügen, wenn das Sollbruchelement 26 sich entsprechend verbiegt, um den Befestigungsabschnitt 22 und damit die Scheibenwischvorrichtung 10 zurückweichen zu lassen.

## Patentansprüche

1. Scheibenwischvorrichtung **(10),** insbesondere für ein Kraftfahrzeug, mit einem Befestigungsabschnitt **(22)** und einem Befestigungsmittel **(28),** zur Befestigung der Scheibenwischvorrichtung **(10)** am Kraftfahrzeug, wobei ein Sollbruchelement **(26)** zwischen Befestigungsabschnitt **(22)** und Kraftfahrzeug vorgesehen ist, das im Bereich des Befestigungsmittels **(28)** angeordnet ist, **dadurch gekennzeichnet, dass** das Sollbruchelement **(26)** eine erste, insbesondere kreisrunde Scheibe **(38)** und eine zweite, insbesondere kreisrunde Scheibe **(34)** aufweist, die im wesentlichen koaxial zueinander angeordnet sind und durch mehrere Stützstreben **(36)** miteinander verbunden sind.

2. Scheibenwischvorrichtung (10) nach Anspruch 1, **dadurch gekennzeichnet, dass** mindestens ein Wischerlager (14) vorgesehen ist, in dem zumindest eine Wischerwelle (16) gelagert ist, an der ein Wischerarm befestigbar ist, und dass der Befestigungsabschnitt (22) am Wischerlager (14) angeordnet ist.

3. Scheibenwischvorrichtung (10) nach einem der vorhergehenden Ansprüche, **dadurch gekennzeichnet, dass** das Sollbruchelement (26) einstückig mit dem Befestigungsabschnitt (22) ausgebildet ist.

4. Scheibenwischvorrichtung (10) nach einem der vorhergehenden Ansprüche, **dadurch gekennzeichnet, dass** die erste Scheibe (34) dem Befestigungsabschnitt (22) zugewandt ist und einen kleineren Durchmesser aufweist als die zweite Scheibe (38).

5. Scheibenwischvorrichtung (10) nach einem der vorhergehenden Ansprüche, **dadurch gekennzeichnet, dass** das Sollbruchelement (26) einstückig aus Kunststoff, insbesondere in einem Spritz-Guss-Verfahren, ausgebildet ist.

6. Scheibenwischvorrichtung (10) nach einem der vorhergehenden Ansprüche, **dadurch gekennzeichnet, dass** das Sollbruchelement (26) aus Aluminium- oder Zinkdruckguss ausgebildet ist.

7. Scheibenwischvorrichtung (10) nach einem der vorhergehenden Ansprüche, **dadurch gekennzeichnet, dass** das Befestigungsmittel (28) als Schraube oder Niete ausgebildet ist.

8. Scheibenwischvorrichtung (10) nach einem der vorhergehenden Ansprüche, **dadurch gekennzeichnet, dass** das Befestigungsmittel (28) in einer Hülse (40) angeordnet ist, die das Sollbruchelement (26) durchgreift.

9. Scheibenwischvorrichtung (10) nach einem der vorhergehenden Ansprüche, **dadurch gekennzeichnet, dass** zwischen dem Befesbgungsabschnitt (22) und dem Sollbruchelement (26) ein Dämpfungselement (30) vorgesehen ist.

## Claims

1. Windscreen wiper device (10), particularly for a motor vehicle, with a fastening section (22) and a fastening means (28), for fastening the windscreen wiper device (10) to the motor vehicle, wherein a predetermined breaking element (26) is provided between the fastening section (22) and the motor vehicle which is arranged in the region of the fastening means (28), **characterized in that** the predetermined breaking element (26) has a first, in particular circular disc (38) and a second, in particular circular disc (34), which discs are arranged substantially coaxially with respect to each other and are connected to each other by a plurality of supporting struts (36).

2. Windscreen wiper device (10) according to Claim 1, **characterized in that** at least one wiper bearing (14) is provided in which at least one wiper shaft (16), to which a wiper arm can be fastened, is mounted, and **in that** the fastening section (22) is arranged on the wiper bearing (14).

3. Windscreen wiper device (10) according to one of the preceding claims, **characterized in that** the predetermined breaking element (26) is formed as a single piece with the fastening section (22).

4. Windscreen wiper device (10) according to one of the preceding claims, **characterized in that** the first disc (34) faces the fastening section (22) and has a smaller diameter than the second disc (38).

5. Windscreen wiper device (10) according to one of the preceding claims, **characterized in that** the predetermined breaking element (26) is formed as a single piece from plastic, in particular by injection moulding.

6. Windscreen wiper device (10) according to one of the preceding claims, **characterized in that** the predetermined breaking element (26) is formed from diecast aluminium or zinc.

7. Windscreen wiper device (10) according to one of the preceding claims, **characterized in that** the fastening means (28) is designed as a screw or rivet.

8. Windscreen wiper device (10) according to one of the preceding claims, **characterized in that** the fastening means (28) is arranged in a sleeve (40) which reaches through the predetermined breaking element (26).

9. Windscreen wiper device (10) according to one of the preceding claims, **characterized in that** a damping element (30) is provided between the fastening section (22) and the predetermined breaking element (26).

## Revendications

1. Système d'essuie-glace (10), en particulier pour un véhicule automobile, comprenant une portion de fixation (22) et un moyen de fixation (28), pour la fixation du système d'essuie-glace (10) à un véhicule automobile, un élément destiné à la rupture (26) étant prévu entre la portion de fixation (22) et le véhicule automobile, lequel est disposé dans la région du moyen de fixation (28), **caractérisé en ce que** l'élément destiné à la rupture (26) présente une première rondelle, notamment ronde circulaire (38), et une deuxième rondelle, notamment ronde circulaire (34), qui sont disposées essentiellement coaxialement l'une par rapport à l'autre et qui sont connectées l'une à l'autre par plusieurs nervures de support (36).

2. Système d'essuie-glace (10) selon la revendication 1, **caractérisé en ce que** l'on prévoit au moins un palier d'essuie-glace (14) dans lequel est monté au moins un arbre d'essuie-glace (16) sur lequel peut être fixé un bras d'essuie-glace, et **en ce que** la portion de fixation (22) est disposée sur le palier d'essuie-glace (14).

3. Système d'essuie-glace (10) selon l'une quelconque des revendications précédentes, **caractérisé en ce que** l'élément destiné à la rupture (26) est réalisé d'une seule pièce avec la portion de fixation (22).

4. Système d'essuie-glace (10) selon l'une quelconque des revendications précédentes, **caractérisé en ce que** la première rondelle (34) est tournée vers la portion de fixation (22) et présente un plus petit diamètre que la deuxième rondelle (38).

5. Système d'essuie-glace (10) selon l'une quelconque des revendications précédentes, **caractérisé en ce que** l'élément destiné à la rupture (26) est réalisé d'une seule pièce en plastique, notamment par un procédé de moulage par injection.

6. Système d'essuie-glace (10) selon l'une quelconque des revendications précédentes, **caractérisé en ce que** l'élément destiné à la rupture (26) est réalisé en aluminium ou en zinc coulé sous pression.

7. Système d'essuie-glace (10) selon l'une quelconque des revendications précédentes, **caractérisé en ce que** le moyen de fixation (28) est réalisé sous forme de vis ou de rivet.

8. Système d'essuie-glace (10) selon l'une quelconque des revendications précédentes, **caractérisé en ce que** le moyen de fixation (28) est disposé dans une douille (40) qui traverse l'élément destiné à la rupture (26).

9. Système d'essuie-glace (10) selon l'une quelconque des revendications précédentes, **caractérisé en ce que** l'on prévoit entre la portion de fixation (22) et l'élément destiné à la rupture (26) un élément d'amortissement (30).
